# EUROPEAN PATENT APPLICATION

(11) **EP 4 361 086 A1**
(43) Date of publication of application: **01.05.2024**
(21) Application number: 23201278.1
(22) Date of filing: 02.10.2023
(51) Int. Cl.: B66F 9/075, B66F 9/22, B60G 9/02, B60G 13/08

(54) **TELESCOPIC HANDLER**

(30) Priority: 21.10.2022 IT 202200021756
(71) Applicant: Dieci S.r.l., 42027 Montecchio Emilia (RE) (IT)
(72) Inventor: OGNIBENE, Enrico, 42030 Vezzano sul Crostolo (RE) (IT)
(74) Representative: Corradini, Corrado

(57) **Abstract**

A telescopic handler (10) that comprises:
- a supporting chassis (11) with a front section and a rear section aligned along a longitudinal axis (A) of the supporting chassis (11);
- a lift arm (13) articulated to the rear section of the supporting chassis (11) with the possibility of rotating around at least one swing axis (O) and having a longitudinal axis (B) parallel to the longitudinal axis (A) of the supporting chassis (11);
- a front axle (21) equipped with two front wheels (12) and connected to the front section of the supporting chassis (11);
- a rear axle (22) equipped with two rear wheels (12) and connected to the rear section of the supporting chassis (11);
- a front axle carrier (25) configured to interconnect the front axle (21) to the supporting chassis (11),
wherein the front axle carrier (25) is hinged to the supporting chassis (11) so that it can swing about a first pitch axis (C) transverse to the longitudinal axis (A) of the supporting chassis (11), preferably parallel to the swing axis (O) of the lift arm (13); and
wherein the front axle carrier (25) is hinged to a central portion of the front axle (21), interposed between two extension portions to the ends of which the front wheels (12) are connected, so as to enable the front axle (21) to swing about a second roll axis (D) lying in a median plane of the front axle (21) equidistant from its ends and parallel to the longitudinal axis (A) of the supporting chassis (11); and
- a pair of suspension actuators (26), wherein each suspension actuator (26) connects the supporting chassis (11) to a respective extension portion of the front axle (21).

## Description

### TECHNICAL FIELD

The present invention concerns a telescopic handler (or telehandler) and suspension system for telescopic handlers.

### PRIOR ART

As is well known, a telescopic handler is an operating vehicle equipped with a lift arm, which is, as a rule, rotatable between a lowered and a raised position by means of a hydraulic actuator and is extensible, e.g. telescopically, between a contracted and an extended position by means of at least one further hydraulic actuator.

Generally, telescopic handlers have a connection system whereby the front wheels are supported by a front axle that is rigidly attached to the support chassis (to allow for a more rigid configuration of the telescopic handler at the front and, therefore, allow for greater stability while lifting loads) and with the rear wheels supported by a rear axle that is associated swinging to the supporting chassis with the possibility to swing about a roll axis parallel to the longitudinal (front-rear) axis of the supporting chassis and lying on a vertical median plane of the rear axle.

A need felt in the industry is to increase the drivability and driving comfort of such telescopic handlers (e.g. in the fast moving sections of the telescopic handler), thus allowing higher travel speeds, while at the same time maintaining good stability, both when driving the vehicle and when working the lift arm.

One purpose of the present invention is to meet these and other needs of the known technology (which will be made clear below), within the framework of a simple, rational, structurally and functionally robust and cost-effective solution.

These objects are achieved by the features of the invention set forth in the independent claim. The dependent claims outline preferred and/or particularly advantageous aspects of the invention.

### DISCLOSURE OF THE INVENTION

The invention, in particular, makes available a telescopic handler that comprises:
- a supporting chassis with a front section and a rear section aligned along a longitudinal axis of the supporting chassis;
- a lift arm articulated to the rear section of the supporting chassis with the possibility of rotating around at least one swing axis and having a longitudinal axis parallel to a longitudinal axis of the supporting chassis;

- a front axle equipped with two front wheels and connected to the front section of the supporting chassis;
- a rear axle equipped with two rear wheels and connected to the rear section of the supporting chassis;
- a front axle carrier configured to interconnect the front axle to the supporting chassis,
   wherein the front axle carrier is hinged to the supporting chassis so that it can swing about a first pitch axis transverse to the longitudinal axis of the supporting chassis, preferably parallel to the swing axis of the lift arm; and
   wherein the front axle carrier is hinged to a central portion of the front axle, interposed between two extension portions to the ends of which the front wheels are connected, so as to enable the front axle to swing about a second roll axis lying in a median plane of the front axle equidistant from its ends and parallel to the longitudinal axis of the supporting chassis; and
- a pair of suspension actuators, wherein each suspension actuator connects the supporting chassis to a respective extension portion of the front axle.

Thanks to this solution, it is possible to make available a suspension unit of a telescopic handler, which enables the above-mentioned goals to be achieved.

Advantageously, a central portion of the rear axle, interposed between two extension portions to the ends of which the rear wheels are connected, can be hinged to the supporting chassis so that it can swing about a third roll axis parallel to the longitudinal axis of the supporting chassis.

Preferably, the telescopic handler may comprise at least one rear axle locking actuator, wherein the locking actuator connects the supporting chassis to an extension portion of the rear axle and is selectively switchable between a locked configuration, in which it locks the swinging of the rear axle about the third roll axis, and an unlocked configuration, in which it enables the swinging of the rear axle about the third roll axis.

Advantageously, each suspension actuator is selectively switchable between a controlled and/or locked configuration, in which it controls and/or locks (respectively) the swinging of the front axle about the second roll axis and/or the first pitch axis, and a free (albeit damped) configuration, in which it enables free swinging of the front axle about the second roll axis and/or the first pitch axis.

Again, the telescopic handler may include a control system configured to manage at least the suspension actuators.

The control system can also be configured to manage the locking actuator.

Again, the control system can be configured to:
- switch each suspension actuator between a controlled and/or locked configuration, in which it commands and/or locks (respectively) the swinging of the front axle about the second roll axis and/or the first pitch axis, and a free configuration, in which it allows free (albeit damped) swinging of the front axle about the second roll axis and/or the first pitch axis; and
- switch the locking actuator between a locked configuration, in which it locks the swinging of the rear axle about the third roll axis, and an unlocked configuration, in which it enables the swinging of the rear axle about the third roll axis.

Advantageously, the control system can be configured to switch the locking actuator into the locked configuration when one or each of the suspension actuators is in the free configuration.

Advantageously, the control system can be configured to:
detect at least one operating parameter of the telescopic handler, preferably chosen from the group consisting of a load on the lift arm, a position and/or extension of the lift arm; a travel speed of the telescopic handler; and
switch one or each of the suspension actuators to the controlled and/or locked configuration depending on the detected operating parameter, preferably if the load detected (directly or indirectly) exceeds a predetermined threshold value thereof and/or if the position and/or extension of the lift arm is within a certain range of threshold positions and/or if the detected travel speed is less than a predetermined threshold travel speed.

Advantageously, the control system may comprise a hydropneumatic control unit including at least one gas accumulator.

Preferably, each suspension actuator can be connected to the supporting chassis and/or the respective extension portion by a respective constraint with at least two degrees of freedom.

### BRIEF DESCRIPTION OF THE DRAWINGS

Further features and advantages of the invention will be more apparent after reading the following description provided by way of a non-limiting example, with the aid of the accompanying drawings.

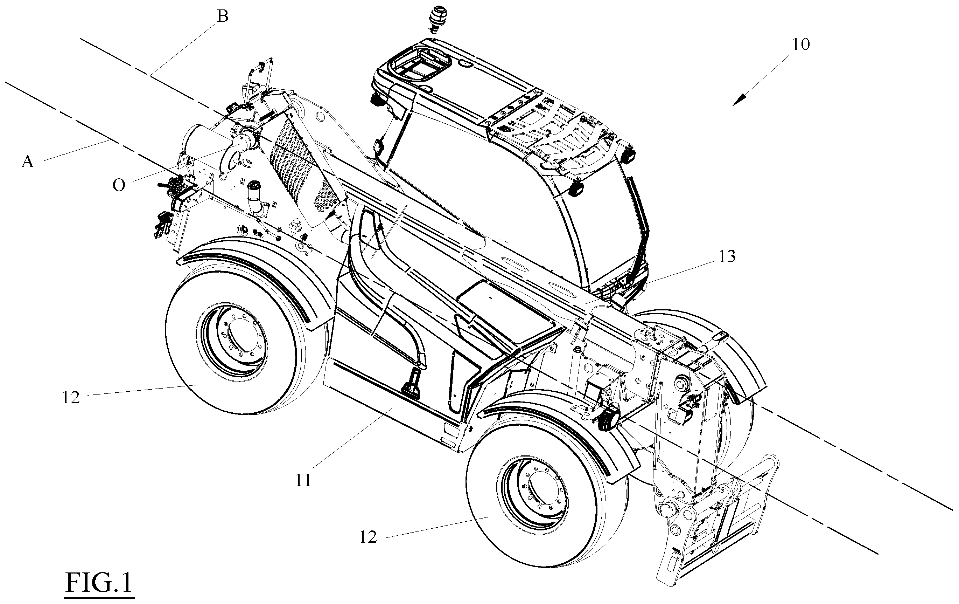

Figure 1 is an axonometric view of a telescopic handler according to the invention.

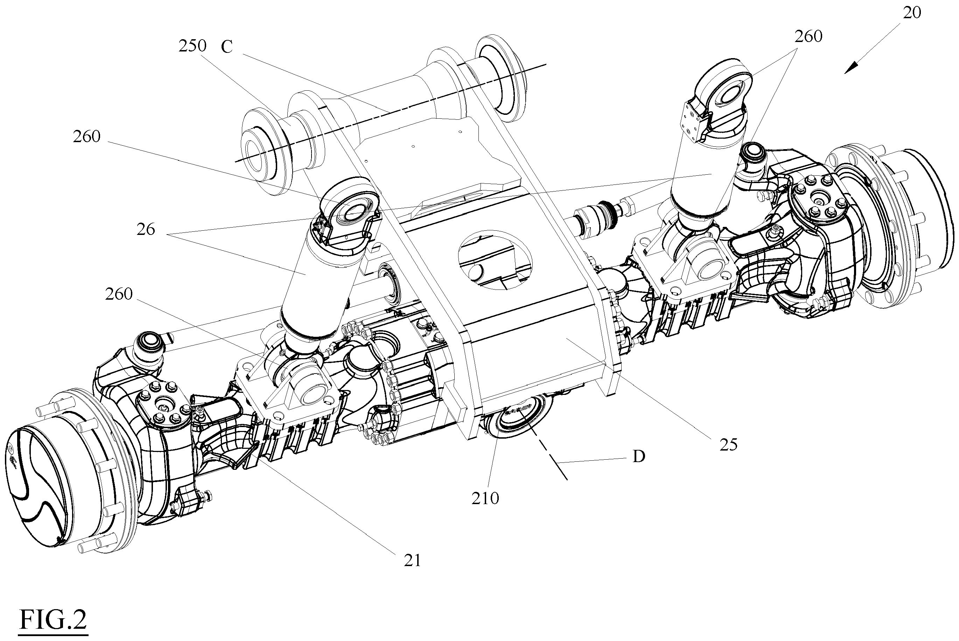

Figure 2 is an axonometric view of a front axle of the telescopic handler according to the invention.

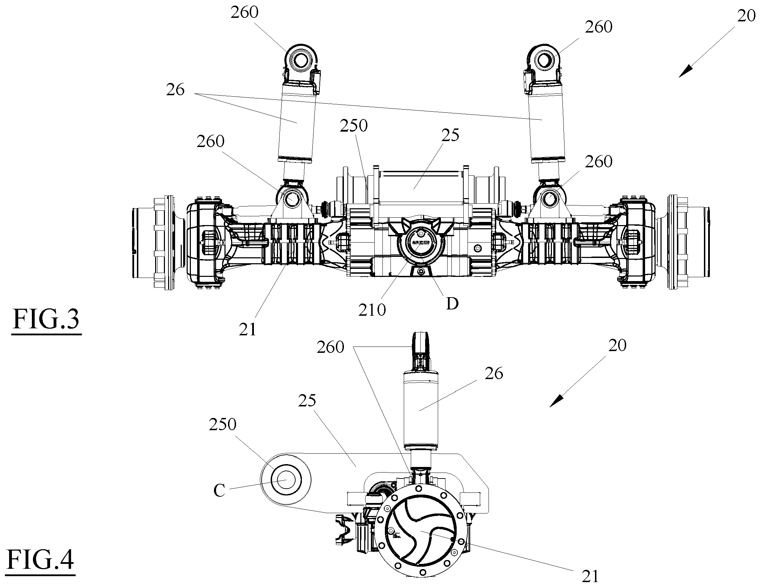

Figure 3 is a front view of Figure 2.
Figure 4 is a side view of Figure 3.

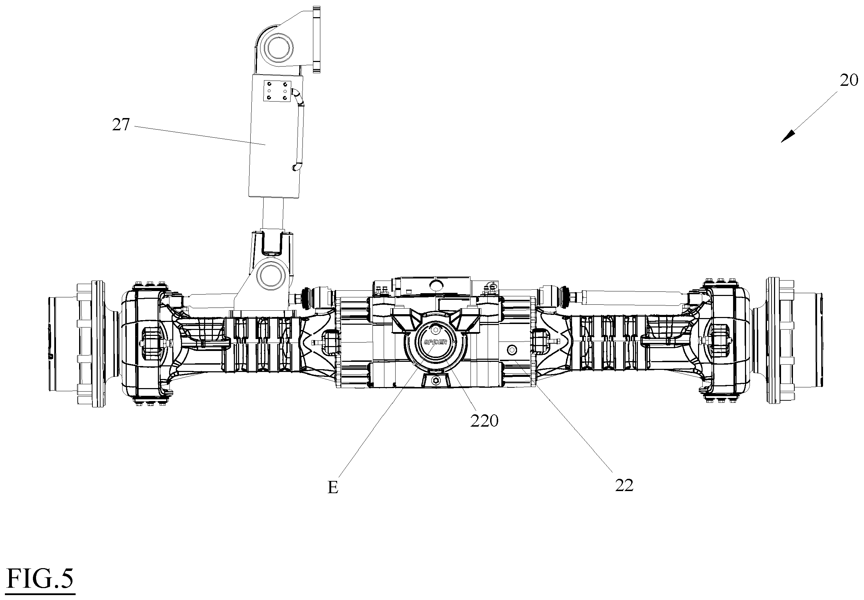

Figure 5 is a front view of a rear axle of the telescopic handler according to the invention.

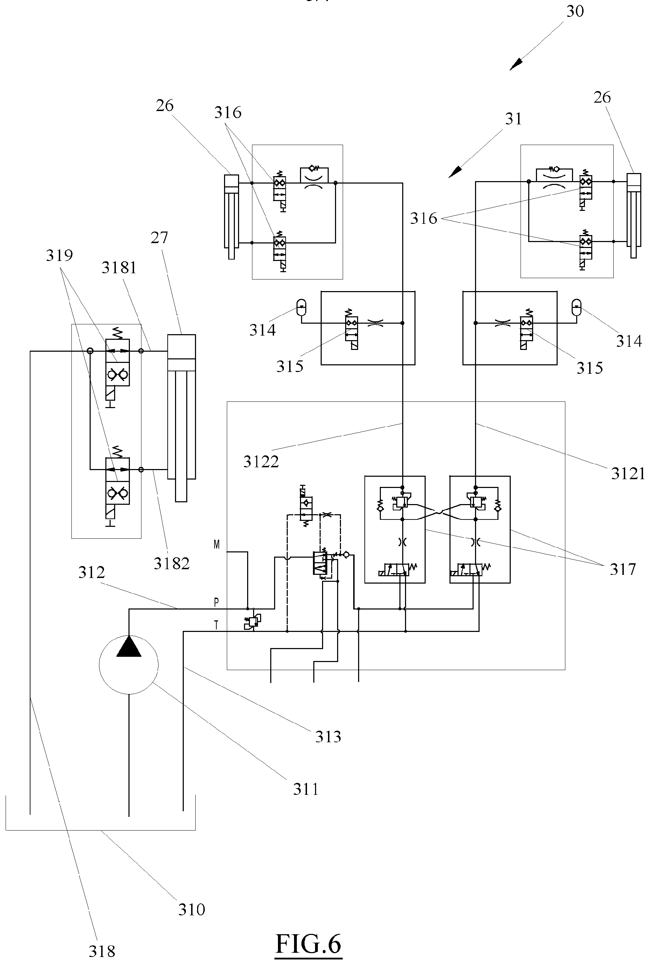

Figure 6 is a schematic view of a hydraulic circuit of a telescopic handler suspension unit according to the invention.
Figure 7 is a schematic view of a variant of the hydraulic circuit of the telescopic handler suspension unit according to the invention.

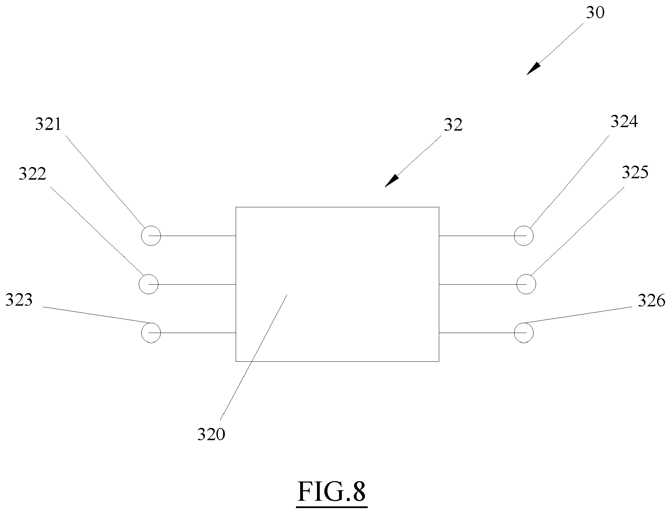

Figure 8 is a schematic view of an electronic control module of the telescopic handler suspension unit according to the invention.

### BEST MODE TO IMPLEMENT THE INVENTION

With particular reference to these figures, a telescopic handler (or lifting vehicle) has been comprehensively referred to as 10.

The telescopic handler 10 is equipped with a movable supporting chassis 11 on wheels 12, one pair of wheels 12 at the front and one pair of wheels 12 at the rear, and supporting at the top a lift arm 13 (and, for example, a driver's cab, e.g. placed to the side of the lift arm 13).

The supporting chassis 11 is substantially rigid (i.e. non-deformable with the usual workloads to which it is subjected in operation).

The supporting chassis 11 has for example an elongated shape along a longitudinal axis A (defining the longitudinal axis of the telescopic handler 10) and therefore has, at or near a first axial end thereof, a front section, and at or near an opposing second axial end thereof, a rear section.

In the present description, front refers to the portion of the telescopic handler 10 or the supporting chassis 11 which precedes (that is, it is placed in front) in a travel direction of the telescopic handler 10 on the ground in a usual and preferred forward gear (i.e. in which the free end of the lift arm 13 is placed) and rear refers to the portion of the telescopic handler 10 or of the supporting chassis 11 which follows (i.e. is placed behind) in a travel direction of the telescopic handler 10 on the ground in a usual and preferred forward gear (or that precedes in a reverse gear).

The lift arm 13 is preferably hinged - at its rear end - to the supporting chassis 12, e.g. above it, preferably at its rear section.

For example, the lift arm 13 has an elongated shape along a longitudinal axis B parallel to the longitudinal axis A of the supporting chassis 11 (i.e. which lies on a plane parallel to the longitudinal axis A of the supporting chassis itself) and therefore has a rear axial end thereof hinged to the rear section of the supporting chassis 11 and an opposed free (distal) front axial end, which protrudes for example beyond the front end of the supporting chassis 11.

The lift arm 13 is preferably of the telescopic type.

In particular, the lift arm 13 has a plurality of sections that can be operated between a contracted and an extended position by means of a first (double-acting) hydraulic actuator.

The lift arm 13 is hinged to the supporting chassis 11 so that it can swing about a (single) swing axis O by means of a second (double-acting) hydraulic actuator.

The lift arm 13 has, at its front free axial end, a connection member, e.g. a tool-carrier plate, adapted to be connected to one or more work tools, such as buckets, forks, cabs or others.

The telescopic handler 10 also includes a drivetrain unit (not illustrated as it is a known type) to drive the drive wheels 12 and, indirectly, to move the lift arm 13.

The drivetrain unit comprises at least an engine.

For example, the drivetrain unit comprises (or consists of) an endothermic engine. Alternatively, the drivetrain unit includes (or consists of) an electric motor.

For example, the drivetrain unit may be a hybrid type, i.e. it may comprise an endothermic engine and an electric motor.

The supporting chassis 11 is supported on the ground by the wheels 12 through the interposition of a suspension unit 20, as will be better described below.

The suspension unit 20 comprises a front axle 21 (rigid) supporting, at its opposing free ends (equipped with respective hubs), the front pair of wheels 12.

The front axle 21 is formed by an elongated body with a central portion interposed between two extension portions to whose free ends the front wheels are connected.

The front axle 21 is supported, as will be better described below, by the front section of the supporting chassis 11.

Again, the suspension unit 20 comprises a rear 22 (rigid) axle supporting, at the opposite free ends (equipped with respective hubs), the pair of rear wheels 12.

The rear axle 22 is independent of the front axle 21.

The rear axle 22 is formed by an elongated body with a central portion interposed between two extension portions to whose free ends the front wheels are connected.

The rear axle 22 is supported, as will be better described below, by the rear section of the supporting chassis 11.

At least one of the pair of front wheels 12 and the pair of rear wheels 12 or both can be steering and/or drive wheels.

In the present discussion, vertical refers to either the absolute vertical or any direction orthogonal to the plane on which the front wheels and the rear wheels 12 of the telescopic handler 10 rest. Furthermore, "horizontal" refers herein to either the absolute horizontal or any plane parallel to the plane on which the front wheels and the rear wheels 12 of the telescopic handler 10 rest.

The telescopic handler 10, or suspension unit 20, also comprises a front axle carrier 25. The front axle carrier 25 is essentially defined by a rigid (plate-like) body, i.e. one that is non-deformable by the normal stresses to which it is intended to be subjected in use.

The front axle carrier 25 comprises an elongated (and flat) body along a longitudinal axis parallel to the longitudinal axis A of the telescopic handler 10.

In particular, the front axle carrier 25 has a rear end and an opposing front end.

The rear end of the front axle carrier 25 is connected to the supporting chassis 11, preferably below it.

It is not excluded, however, that the front end of the front axle carrier 25 could be connected to the supporting chassis 11, preferably below it.

The front axle carrier 25 is hinged to the supporting chassis 11 by means of a (single) first hinge pin 250 (rigidly fixed to the supporting chassis 11), so as to be able to swing about a (single) first pitch axis C transverse to the longitudinal axis A of the supporting chassis 11, preferably parallel to the swing axis O of the lift arm 13, i.e. orthogonal to the longitudinal axis A of the supporting chassis 11 and horizontal.

In detail, the front axle carrier 25 is hinged to the supporting chassis 11 via (or at) its rear end (e.g. shaped like a fork).

Alternatively (not illustrated), the front axle carrier 25 can be hinged to the supporting chassis 11 via (or at) its front end (e.g. shaped like a fork)

For example, the enabled oscillations of the front axle carrier 25 with respect to the supporting chassis 11 are comprised within a range of approximately 15°, i.e. comprised between +7.5° and -7.5° with respect to a central zero position (defined below).

The end of the front axle carrier 25, which is opposed to the end constrained to the supporting chassis 11, is free and, for example, supports the front axle 21 (e.g. underneath it).

In the example shown, the free end of the front axle-carrier 25 is the front end of the front axle-carrier 25 (as its rear end is hinged to the supporting chassis 11).

It is not excluded, however, that this free end may be defined by the rear end of the front axle carrier 25, when the front axle carrier 25 is hinged to the supporting chassis 11 by its front end (case not illustrated).

The front axle 21 is, preferably, hinged to the front axle carrier 25, i.e. to its free end (front in the example illustrated), so that it can rotate (with respect to the front axle carrier 25) about a (single) second roll axis D lying on a median plane of the front axle 21 equidistant from its free ends and parallel to the longitudinal axis A of the supporting chassis 11.

The front axle 21 is, preferably, hinged to the front axle carrier 25 - i.e. to its free (front) end - via a (single) second hinge pin 210 (or front axle pivot pin).

The second hinge pin 210 is, for example, rigidly fixed to the front axle 21 at its central portion.

The second hinge pin 210 defines the second roll axis D, which lies on a median plane of the front axle 21 that is equidistant from its opposing free ends and, therefore, from the wheels 12 supported by it.

In practice, the hinging between the front axle 21 and (the free end - e.g. front - of) the front axle carrier 25 allows the front axle 21 to swing about the (only) second roll axis D parallel to the longitudinal axis A of the supporting chassis 11.

At the free (front) end of the front axle carrier 25 there is a connection (e.g. fitted with rolling elements), preferably formed by a pair of plates which together define the cylindrical revolution seat for the second hinge pin 210, which connection is capable of supporting in rotation the second hinge pin 210 of the front axle 21.

For example, the enabled oscillations of the front axle 21 with respect to the supporting chassis 25 are comprised within a range of approximately 14°, i.e. comprised between 7° and -7° with respect to a central zero position (defined below).

In practice, the (vertical) upward or downward swinging of the front axle carrier 25 relative to the supporting chassis 11 about the first pitch axis C moves the second hinge pin 210 (and thus the front axle 25) vertically (in a vertical plane parallel to the longitudinal axis A of the supporting chassis 11).

The suspension unit 20 also comprises a pair of suspension actuators 26, which are configured to control and/or condition the movement of the front axle 21 with respect to the supporting chassis 11.

Each of the suspension actuators 26 is, for example, a hydraulic actuator, preferably double-acting.

It is not excluded, however, that each suspension actuator 26 could be of a different type. For example, each suspension actuator 26 comprises a cylinder within which a movable rod slides with respect to the cylinder between a retracted and an extracted position.

The rod has a piston inside the cylinder that divides the environment inside the cylinder into two chambers, each of which has a hydraulic outlet for the passage of operating fluid (i.e. oil) into and/or out of the respective chamber.

Each suspension actuator 26 (inter)connects, directly or indirectly, the supporting chassis 11 to a respective extension portion of the front axle 21.

In practice, a right suspension actuator 26 interconnects the supporting chassis 11 to a right extension portion of the front axle 21 (which is interposed between the front axle carrier 25 and the free end of the front axle 21 supporting the right front wheel 12) and a left suspension actuator 26 interconnects the supporting chassis 11 to a left extension portion of the front axle 21 (which is interposed between the front axle carrier 25 and the free end of the front axle 21 supporting the left front wheel 12).

In detail, each suspension actuator 26 has one between (the free end of) the rod and (the free end of) the cylinder connected to (below the) supporting chassis 11 and the other between (the free end of) the cylinder and (the free end of) the rod connected to (above the) respective extension portion of the front axle 21.

Advantageously, each suspension actuator 26 is connected to the supporting chassis 11 and/or the respective extension portion of the front axle 21 by a respective constraint with at least two degrees of freedom.

In particular, each suspension actuator 26 is connected to the supporting chassis 11 and/or the respective extension portion of the front axle 21, preferably to both, by means of a respective ball joint 260.

It is not excluded, however, that the constraint with at least two degrees of freedom can be defined by another joint, such as a universal joint or the like.

The suspension unit 20 further comprises a connection unit configured to connect the rear axle 22 to the supporting chassis 11.

The rear axle 22 is, preferably, hinged to the supporting chassis 11 so that it can rotate (relative to the supporting chassis 11) about a (single) third roll axis E lying on a median plane of the rear axle 22 equidistant from its free ends and parallel to the longitudinal axis A of the supporting chassis 11.

The rear axle 22 is, preferably, hinged to the supporting chassis 11 via a (single) third hinge pin 220 (or rear axle pivot pin).

The third hinge pin 220 is, for example, rigidly fixed to the rear axle 22, for example at its central portion.

The third hinge pin 220 defines the third roll axis E, which lies on a median plane of the rear axle 22 and is equidistant from its opposing free ends and, therefore, from the wheels 12 supported by it.

In practice, the hinging between the rear axle 22 and the supporting chassis 11 enables the rear axle 22 to swing about the (only) third roll axis E parallel to the longitudinal axis A of the supporting chassis 11.

For example, the enabled oscillations of the rear axle 22 with respect to the supporting chassis 11 are comprised within a range of approximately 14°, i.e. comprised between +10° and -10° with respect to a central zero position.

Preferably, the (rear) connection unit comprises at least one locking actuator 27, which is configured to control and/or condition and/or lock the movement (i.e. the oscillation about the aforementioned third roll axis E) and/or the stopping of the rear axle 22 with respect to the supporting chassis 11.

In the example shown, only one locking actuator 27 is shown, however, it is not excluded that there may be more than one locking actuator 27 (e.g. a pair of locking actuators 27). The locking actuator 27 is, for example, a hydraulic actuator, preferably double-acting.

It is not excluded, however, that the locking actuator 27 could be of a different type.

For example, the locking actuator 27 comprises a cylinder within which a movable rod slides with respect to the cylinder between a retracted and an extracted position.

The rod has a piston inside the cylinder that divides the environment inside the cylinder into two chambers, each of which has a hydraulic outlet for the passage of operating fluid (i.e. oil) into and/or out of the respective chamber.

The locking actuator 27 (inter)connects, directly or indirectly, the supporting chassis 11 to an extension portion of the rear axle 22.

Advantageously, the suspension actuator 27 is connected to the supporting chassis 11 and/or the respective extension portion of the rear axle 22 via a respective constraining hinge (having a - single - axis of rotation parallel to the third roll axis E).

The telescopic handler 10 also includes a control system 30 configured - among other things - to manage the suspension unit 20.

The control system 30 includes, for example, a hydraulic circuit 31.

Preferably, the hydraulic circuit 31 is configured to manage the operation of the damping actuators 26 and/or the locking actuator 27 of the suspension unit 20 (e.g. individually or simultaneously).

The hydraulic circuit 31 has a first part dedicated to managing the operation of the damping actuators 26.

For example, (such first part of) the hydraulic circuit 31 (which is, for example, a closed circuit) comprises a tank 310 of an operating fluid, such as oil, and a supply pump 311 configured to supply a flow of operating fluid (drawn from the tank 310) to a supply line 312.

The hydraulic circuit 31 also comprises a discharge branch 313 serving the tank 310.

The supply line 312 (is bifurcated and) comprises a first branch 3121 directed to a first damping actuator 26 (e.g. the right) and a second branch 3122 directed to the second damping actuator 26.

Each branch 3121,3122 of the supply line 31 in turn has a further bifurcation defining a first end section which leads into (or is connected to) a hydraulic outlet of one chamber of the cylinder of the respective damping actuator 26 and a second end section which leads into/is connected to the hydraulic outlet of the other chamber of (the same) damping actuator 26.

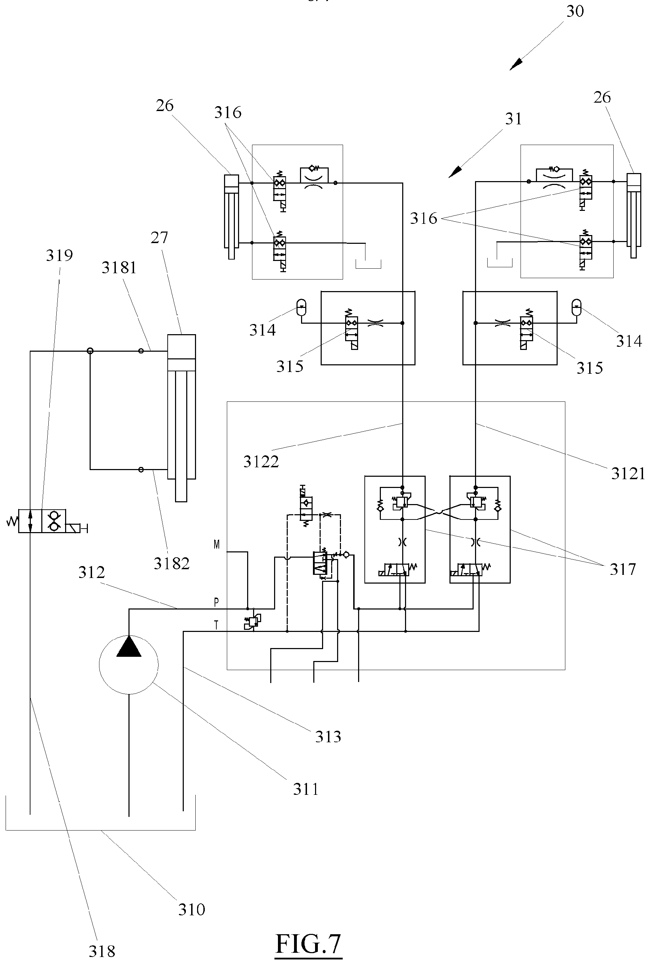

In a possible variant (shown in Figure 7), it is possible to envisage that each branch 3121,3122 of the supply line 312 (which, in this case, is itself not bifurcated) flows into (or is connected to) a hydraulic outlet of one chamber of the cylinder of the respective damping actuator 26 (e.g., the outlet on the receiver side) and the hydraulic outlet of the other chamber (e.g. the outlet on the rod side) of (the same) damping actuator 26 is connected, by means of a respective discharge branch, to the tank 310 or to another channel of the circuit into which operating fluid flows at low pressure. The hydraulic circuit 30 further comprises at least one gas accumulator 314.

For example, the hydraulic circuit 30 comprises a pair of gas accumulators 314, one for each damping actuator 26.

Preferably, on each branch 3121,3122 of the supply line 312 (e.g. upstream of the further bifurcation) there is an accumulation channel on which a respective gas accumulator 314 is placed.

The gas accumulator 314 comprises a container equipped with a first variable-volume chamber filled with gas and a second variable-volume chamber in fluid communication with the accumulation channel (and thus with the respective branch 3121,3122), the two chambers being separated by a deformable membrane or piston (sliding in the container). On each accumulation channel (between the gas accumulator 314 and the respective branch 3121,3122) a first control valve 315 is placed, e.g. electronically controlled/controllable, which is selectively switchable between an open position (which allows the passage, in both directions, of operating fluid between the respective gas accumulator 314 and the respective branch 3121,3122) and a closed position (which interrupts the passage, in both directions, of operating fluid between the respective gas accumulator 314 and the respective branch 3121,3122).

A lamination choke can also be provided on each accumulation channel (so that the first control valve 315 is interposed between the lamination choke and the respective gas accumulator 314).

On each end section of each branch 3121,3122 there is, moreover, a respective second control valve 316, e.g. electronically controlled/controllable, which is selectively switchable between an open position (which allows the passage, in both directions, of operating fluid between the respective chamber of the respective damping actuator 26 and the respective branch 3121,1322) and a closed position (which interrupts the passage, in both directions, of operating fluid between the respective chamber of the respective damping actuator 26 and the respective branch 3121,1322).

On at least one end section of each branch 3121,3122, an additional lamination choke may also be provided (so that a second control valve 316 is interposed between the lamination choke and the respective damping actuator 26).

In the variant described above and shown in figure 7 (in which each branch 3121,3122 of the supply line 312 flows into the hydraulic outlet of a chamber of the cylinder of the respective damping actuator 26 and the hydraulic outlet of the other chamber thereof is connected, via a respective discharge branch, to the tank 310) a second control valve 316 is placed on the respective branch 3121,3122 of the supply line 312 (e.g. interposed between the respective gas accumulator 314 and the respective chamber) and a further second control valve 316 is placed on the discharge branch (interposed between the tank 310 and the respective chamber).

Furthermore, on each branch 3121,3122 of the supply line 312 (e.g. upstream of the bifurcation with the accumulation branch, i.e. interposed between the bifurcation with the accumulation branch and the supply pump 311) there is a respective modulating valve 317, e.g. electronically controlled/controllable and/or manually operated, which is selectively switchable between:
- an open position (allowing the passage of operating fluid from the supply pump 311 to the respective damping actuator 26); and
- a closed position (which interrupts the flow of operating fluid from the supply pump 311 to the respective damping actuator 26 by sending the entire flow of operating fluid into the discharge branch 313; and
- (preferably, but not limited to) any intermediate position between the open position and the closed position (in which it regulates the operating fluid flow by directing a first part of it to the respective damping actuator 26 and a second part to the discharge branch 313, wherein the partition ratio is a function of the position of the slider of the modulating valve 317 itself).

The hydraulic circuit 31 has a second part dedicated to managing the operation of the locking actuator 27.

For example, (this second part of) the hydraulic circuit 31 (which is, for example, a closed circuit) comprises a tank 310 of an operating fluid, such as oil, which is preferably the same tank 310 described above.

This (second part of the) hydraulic circuit 31 comprises a service line 318, which interconnects the tank 310 to the locking actuator 27.

The service line 318 (is for example bifurcated and) comprises a first end section 3181 flowing into/connected to a hydraulic outlet of one chamber of the cylinder of the respective locking actuator 27 and a second end section 3182 flowing into/connected to the hydraulic outlet of the other chamber of (the same) locking actuator 27.

On each end section 3181,3182 there is, moreover, a respective third control valve 319, e.g. electronically controlled/controllable, which is selectively switchable between an open position (which allows the passage, in both directions, of operating fluid between the respective chamber of the respective locking actuator 27 and the service line 318) and a closed position (which interrupts the passage, in both directions, of operating fluid between the respective chamber of the respective locking actuator 276 and the service line 318).

Alternatively (as shown in the variant of Figure 7, but not limited to this embodiment), it is possible to provide that a (single) third control valve 319 can be arranged on the service line 318 interposed between the tank 310 and the bifurcation of the service line 318 in the two sections 3181 and 3182 (i.e. upstream of this bifurcation).

Also in this case the third control valve 319 is e.g. electronically controlled/controllable, and is selectively switchable between an open position (which allows the passage, in both directions, of operating fluid between the respective chamber of the respective locking actuator 27 and the service line 318) and a closed position (which interrupts the passage, in both directions, of operating fluid between the respective chamber of the respective locking actuator 276 and the service line 318).

The control system 30 comprises, for example, an electronic control module 32.

The electronic control module 32 comprises a group of sensors.

In particular, the group of sensors comprises at least one sensor configured to detect an operating parameter of the suspension unit 30.

The group of sensors comprises, for example, a pair of first sensors 321, each associated with a respective suspension actuator 26.

For example, each first sensor 321 is configured to detect the stroke and/or position (absolute or relative with respect to a zero position, defined by a predetermined mid-stroke position of the rod in the cylinder) of the respective suspension actuator 26.

For example, each first sensor 321 is a position sensor (located on board the respective suspension actuator 26).

In addition, the group of sensors may, for example, comprise at least a second sensor 322 configured to detect (directly or indirectly) the tilt or angular position (real-time) of the lift arm 13.

The second sensor 322 could comprise either one or more angle sensors (e.g. configured to detect an absolute or relative tilt with respect to a zero position, defined by a lower end stop of the lift arm 13) or one or more sensors associated with the actuator controlling the tilt of the lift arm 13, such as a position sensor, wherein the sensor is configured to detect the stroke and/or position (absolute or relative to a zero position, defined by an end stop of the extension arm) of such actuator.

The group of sensors, for example, further comprises at least a third sensor 323 configured to detect (directly or indirectly) the extension of the lift arm 13, for example configured to detect the (real-time) length or extension of the lift arm 13 (e.g. an absolute or relative length with respect to a defined end stop position when the lift arm 13 is in its contracted position).

The third sensor 323 may comprise or consist of one or more position sensors associated with the lift arm 13 and/or the actuator controlling the extension of the lift arm 13. For example, the position sensor is configured to detect the stroke and/or position (absolute or relative to a zero position, defined by an end stop of the extension arm) of such actuator.

The group of sensors, for example, comprises at least a fourth sensor 324 serving the lift arm 13 and/or the telescopic handler 10.

For example, the fourth sensor 324 comprises or consists of a load sensor, which is, for example, configured to detect (directly) a load value acting on the lift arm 13 (wherein, for example, the detected load value is an absolute or relative value with respect to a null load condition acting on the lift arm 13).

Alternatively or additionally, the fourth sensor 324 comprises or consists of an anti-tilt moment sensor, which is configured, for example, to detect an overturning moment (i.e. a load reduction that tends to lift the rear axle 22) of the telescopic handler 10, or such a sensor is configured to indirectly detect a load value acting on the lift arm 13. For example, the anti-tip moment sensor is configured to detect a deformation (bending) of the rear axle 22 (with respect to a zero reference deformation indicating the axle is fully lifted/unloaded); in practice, the less the deformation (with respect to the unloaded configuration of the rear axle 22), the greater the load on the lift arm 13).

The group of sensors, for example, comprises at least one speed sensor 325 configured to detect (directly or indirectly) the travel speed of the telescopic handler 10 (on the ground).

The speed sensor, for example, comprises or consists of a speedometer.

The group of sensors may, for example, comprise at least one tilt sensor 326 configured to detect (directly or indirectly) the inclination of the supporting chassis 11 with respect to a horizontal (absolute) plane.

The tilt sensor 326, for example, comprises or consists of an absolute angle sensor.

The electronic control module 32 further comprises a command and control unit, which is for example on board the telescopic handler 10.

The command and control unit is, generally, configured to receive as input commands from the operator and/or signals from one or more of the sensors in the group of sensors and to provide as output control signals to be made available to the telescopic handler 10 (e.g. to the suspension unit 20 and/or the lift arm 13 or the like).

The command and control unit may, for example, comprise one or more operator-driven controls (not illustrated, as known).

For example, the controls may be arranged inside the driver's cab next to the lift arm 13. The operator can use the controls to control and/or command the movement/positioning of the suspension unit 20 and/or lift arm and/or the like.

The electronic control module 32 and/or the command and control unit further comprises an electronic control unit 320.

The electronic control unit 320 may be any device/processor capable of executing machine-readable instructions such as, for example, a controller, an integrated circuit, a microchip or the like.

As used herein, the term "operatively connected" means that the components are capable of exchanging data signals with each other such as, for example, electrical signals via conductive medium, electromagnetic signals via air, optical signals via optical waveguides and the like.

The electronic control unit 320 may be provided with or connected to one or more memory modules, which may be any device capable of storing data and/or instructions and/or software programmes that can be read and implemented by the electronic control unit 320.

The electronic control unit 320 is operatively connected to the group of sensors and/or to each suspension actuator 26 and/or to the locking actuator 27 and/or to the hydraulic circuit 31, i.e. to each first control valve 315, to each second control valve 316, to each modulating valve 317 and to each third control valve 319 (as well as to the drivetrain unit and/or the hydraulic system), as further described below.

According to a preferred aspect of the invention, the electronic control unit 320 is configured to manage and control the operational steps of the suspension unit 20, for example as described below.

For example, the electronic control unit 320 is operable, so that the suspension unit 20 operates in a first operating mode called suspension mode.

Suspension mode is, for example, suitable for using the telescopic handler 10 during (fast) transfers.

The electronic control unit 320 (and/or the operator via one of the controls) can activate suspension mode when the travel speed of the telescopic handler 10, detected by the speed sensor 325, is greater than a certain speed threshold value.

In practice, the electronic control unit 320 is configured to:
detect at least one operating parameter of the telescopic handler 10, preferably chosen from the group consisting of a load on the lift arm 13, a position and/or extension of the lift arm 13; a travel speed of the telescopic handler 10; and
activate suspension mode by switching one or each of the suspension actuators 26 to the controlled configuration according to the detected operating parameter, preferably if the detected load exceeds a predetermined threshold value thereof and/or if the position and/or extension of the lift arm is within a certain range of threshold positions and/or if the detected travel speed is less than a predetermined threshold travel speed.

Before activating suspension mode (or in preparation for activating suspension mode), the electronic control unit 320 can be configured to perform a reset cycle, in which it controls (the hydraulic circuit 31 so as to bring) each suspension actuator 26 to a zero position defined by a mid-stroke position of the rod in the cylinder (such that the supporting chassis 11 of the telescopic handler 10 is brought to a horizontal position).

In suspension mode, the electronic control unit 320 is configured to move each first control valve 315 and each second control valve 316 to their respective open position (leaving each of the modulating valves 317 in the closed position).

At the same time, in suspension mode, the electronic control unit 320 is configured to lock the locking actuator 27, i.e., to move each third control valve 319 to the closed position (in practice, the electronic control unit 320 is configured to selectively switch the locking actuator 27 between a locked configuration, in which it locks the swinging of the rear axle 22 about the third roll axis E, and an unlocked configuration, in which it enables the swinging of the rear axle 22 about the third roll axis E).

In the suspension mode of the suspension unit 20, rough ground and/or bends are compensated for by the suspension actuators 26 (and the leakage of operating fluid between their chambers) and/or the gas accumulators 314 (which form the elastic component of the suspension unit 30).

In practice, the electronic control unit 320 is configured to:
- switch each suspension actuator 26 between a controlled configuration, in which it controls the swinging of the front axle 21 about the second roll axis D and/or the first pitch axis C, and a free configuration, in which it allows free (albeit damped and/or shock absorbed) swinging of the front axle 21 about the second roll axis D and/or the first pitch axis C; and
- switch the locking actuator 27 between a locked configuration, in which it locks the swinging of the rear axle 22 about the third roll axis E, and an unlocked configuration, in which it enables the swinging of the rear axle 22 about the third roll axis E.

In addition, at the same time, the electronic control unit 320 is configured to switch the locking actuator 27 to the locked configuration when one or each of the suspension actuators 26 is in the free configuration.

In addition, the electronic control unit 320 is operable so that the suspension unit 20 operates in a second operating mode called levelling and/or parking mode.

Levelling and/or parking mode is e.g. suitable for the use of the telescopic handler 10 during the operating steps (when the vehicle is stationary or at low speed, when operating and moving the lift arm 13).

The electronic control unit 320 (and/or the operator via one of the controls) can operate levelling and/or parking mode when one of the following conditions occurs.

The electronic control unit 320 (and/or the operator via one of the controls) can operate levelling and/or parking mode when the travel speed of the telescopic handler 10, detected by the speed sensor 325, is less than a predetermined threshold travel speed value (e.g. less than or equal to the aforementioned threshold value).

Furthermore, the electronic control unit 320 can automatically activate levelling and/or parking mode when a load value on the lift arm 13, detected directly or indirectly by the fourth sensor 324, is greater than a predetermined threshold value thereof (greater than the null load value) and/or when an anti-tilt moment value (i.e. rear axle deformation 22) is less than a predetermined reference value (e.g. non-null).

Again, the electronic control unit 320 (and/or the operator via one of the controls) can operate levelling and/or parking mode if the position and/or extension of the lift arm 13 is comprised within a certain range of threshold positions, e.g. has a tilt greater than a certain threshold tilt and/or has an extension greater than a certain threshold extension.

In levelling and/or parking mode, the electronic control unit 320 is configured to move each second control valve 316 to its respective open position (leaving each first control valve 315 in the closed position).

In addition, the electronic control unit 320 is configured to actuate each of the modulating valves 317 (independently) in any position between the closed position, the open position and any intermediate position, as a function of:
- a signal from the controls operated manually by the operator; and/or
- a signal from tilt sensor 326.

Once the desired position of the suspension assembly 20 has been reached, the electronic control unit 320 is configured to move each second control valve 316 and each modulating valve 317 to its respective closed position (in order to maintain the desired position).

In particular, the electronic control unit 320 manages the (lateral) tilt, and then maintains the desired tilt, of the supporting chassis 11 (with respect to the horizontal plane) by actuating the suspension actuators 26 according to an operator-driven command (in manual mode) and/or according to a tilt value received from the inclination sensor 326 (for example to allow automatic levelling), preferably by feedback on the position of the suspension actuators 26.

At the same time, the electronic control unit 320 can be configured to unlock the locking actuator 27, i.e. to move each third control valve 319 to the open position.

In the levelling and/or stationing mode of the suspension unit 20, the telescopic handler 10 (i.e. its supporting chassis 11) can be tilted according to working and/or ground support requirements, while at the same time allowing a high degree of stability when driving the load lifted by the lift arm 13.

In addition, the electronic control unit 320 can be configured to (automatically) enable or activate suspension mode if (e.g. when running the telescopic handler 10) the following conditions are met (simultaneously):
- the travel speed of the telescopic handler 10, detected by the speed sensor 325, is higher than the predetermined threshold travel speed value;
- a load value on the lift arm 13, detected directly or indirectly by the fourth sensor 324, is less than its predetermined threshold value (and/or the anti-tilt moment value is greater than its predetermined reference value); and
- the position and/or extension of the lift arm 13 is outside the given range of threshold positions, e.g. has a lower tilt than the given threshold tilt and/or has a lower extension than the given threshold extension.

The invention thus conceived is susceptible to many modifications and variants, all falling within the same inventive concept.

Moreover, all the details can be replaced by other technically equivalent elements.

In practice, any materials and also any contingent shapes and sizes may be used, depending on the needs, without departing from the scope of protection of the following claims.

## Claims

1. A telescopic handler (10) that comprises:
- a supporting chassis (11) with a front section and a rear section aligned along a longitudinal axis (A) of the supporting chassis (11);
- a lift arm (13) articulated to the rear section of the supporting chassis (11) with the possibility of rotating around at least one swing axis (O) and having a longitudinal axis (B) parallel to the longitudinal axis (A) of the supporting chassis (11);
- a front axle (21) equipped with two front wheels (12) and connected to the front section of the supporting chassis (11);
- a rear axle (22) equipped with two rear wheels (12) and connected to the rear section of the supporting chassis (11);
- a front axle carrier (25) configured to interconnect the front axle (21) to the supporting chassis (11),
wherein the front axle carrier (25) is hinged to the supporting chassis (11) so that it can swing about a first pitch axis (C) transverse to the longitudinal axis (A) of the supporting chassis (11), preferably parallel to the swing axis (O) of the lift arm (13); and
wherein the front axle carrier (25) is hinged to a central portion of the front axle (21), interposed between two extension portions to the ends of which the front wheels (12) are connected, so as to enable the front axle (21) to swing about a second roll axis (D) lying in a median plane of the front axle (21) equidistant from its ends and parallel to the longitudinal axis (A) of the supporting chassis (11); and
- a pair of suspension actuators (26), wherein each suspension actuator (26) connects the supporting chassis (11) to a respective extension portion of the front axle (21).

2. The telescopic handler (10) according to claim 1, wherein a central portion of the rear axle (22), interposed between two extension portions to the ends of which the rear wheels (12) are connected, is hinged to the supporting chassis (11) so that it can swing about a third roll axis (E) parallel to the longitudinal axis (A) of the supporting chassis (11).

3. The telescopic handler (10) according to the preceding claim comprising at least one rear axle locking actuator (27), wherein the locking actuator (27) connects the supporting chassis (11) to an extension portion of the rear axle (22) and is selectively switchable between a locked configuration, in which it locks the swinging of the rear axle (22) about the third roll axis (E), and an unlocked configuration, in which it enables the swinging of the rear axle (22) about the third roll axis (E).

4. The telescopic handler (10) according to claim 1, wherein each suspension actuator (26) is selectively switchable between a controlled and/or locked configuration, in which it controls and/or locks the swinging of the front axle (21) about the second roll axis (D) and/or the first pitch axis (C), and a free configuration, in which it enables free swinging of the front axle (21) about the second roll axis (D) and/or the first pitch axis (C).

5. The telescopic handler (10) according to claim 1, which comprises a control system (30) configured to manage at least the suspension actuators (26).

6. The telescopic handler (10) according to the preceding claim in connection with claim 3, wherein the control system (30) is configured also to manage the locking actuator (27).

7. The telescopic handler (10) according to the preceding claim, where the control system (30) is configured to:
- switch each suspension actuator (26) between a controlled and/or locked configuration, in which it commands and/or locks the swinging of the front axle (21) about the second roll axis (D) and/or the first pitch axis (C), and a free configuration, in which it allows free swinging of the front axle (21) about the second roll axis (D) and/or the first pitch axis (C); and
- switch the locking actuator (27) between a locked configuration, in which it locks the swinging of the rear axle (22) about the third roll axis (E), and an unlocked configuration, in which it enables the swinging of the rear axle (22) about the third roll axis (E).

8. The telescopic handler (10) according to the preceding claim, wherein the control system (30) is configured to switch the locking actuator (27) into the locked configuration when one or each of the suspension actuators (26) is in the free configuration.

9. The telescopic handler (10) according to the preceding claim, where the control system (30) is configured to:
detect at least one operating parameter of the telescopic handler (10), preferably chosen from the group consisting of a load on the lift arm (13), a position and/or extension of the lift arm (13); a travel speed of the telescopic handler (10); and
switch one or each of the suspension actuators (26) to the controlled and/or locked configuration depending on the detected operating parameter, preferably if the load detected exceeds a predetermined threshold value thereof and/or if the position and/or extension of the lift arm (13) is within a certain range of threshold positions and/or if the detected travel speed is less than a predetermined threshold travel speed.

10. The telescopic handler (10) according to claim 5, wherein the control system (30) comprises a hydropneumatic control unit comprising at least one gas accumulator (314).

11. The telescopic handler (10) according to claim 1, wherein each suspension actuator (26) is connected to the supporting chassis (11) and/or the respective extension portion by a respective constraint with at least two degrees of freedom.
